Europäisches Patentamt

European Patent Office

Office européen des brevets

(11) Publication number: **0 208 465**

**A2**

## (12) EUROPEAN PATENT APPLICATION

(21) Application number: **86304890.6**

(22) Date of filing: **25.06.86**

(51) Int. Cl.⁴: **F16D 55/14**

(30) Priority: **06.07.85 GB 8517217**

(43) Date of publication of application:
**14.01.87 Bulletin 87/03**

(84) Designated Contracting States:
**DE FR GB IT**

(71) Applicant: **LUCAS INDUSTRIES public limited company**
**Great King Street**
**Birmingham, B19 2XF West Midlands(GB)**

(72) Inventor: **Price, Anthony George**
**14 Meadow Lane Croesyceiliog Cwmbran**
**Gwent NP44 2EY Wales(GB)**
Inventor: **Campbell, Roy**
**The Corner House 1 Marlbrook Lane**
**Licky Rock Bromsgrove Worcestershire(GB)**
Inventor: **Basnett, Michael Neil**
**22 Pencommin Llangynidr**
**Crickhowell Powys Wales(GB)**

(74) Representative: **Spall, Christopher John et al**
**BARKER, BRETTELL & DUNCAN 138 Hagley Road**
**Edgbaston Birmingham B16 9PW(GB)**

(54) **Improvements in self-energising disc brakes.**

(57) In a self-energising disc brake of the spreading type complementary pairs of angularly spread discrete pads (7, 8) are provided on adjacent faces of the pressure plates (3 and 4) to define ramp surfaces (12, 13) inclined with respect to the planes of the plates (3, 4). The ramp surfaces of each pair cooperate slidably to urge the plates relatively away from each other in an axial direction when the plates are moved relatively angularly by a brake-applying mechanism.

FIG.2.

## IMPROVEMENTS IN SELF-ENERGISING DISC BRAKES

This invention relates to self-energising disc brakes of the kind in which rotatable friction discs provided with friction linings are adapted to be brought into engagement with spaced opposed braking surfaces in a housing by pressure plates located between the friction discs and centered by stationary pilot lugs, application of the brake being initiated by angular movement of the pressure plates effected by operation of a brake-applying mechanism, and camming means being associated with the pressure plates such that on operation of the brake-applying mechanism to move the pressure plates angularly in opposite directions, the camming means is operative to cause the pressure plates to move apart into engagement with the braking surfaces, the pressure plates then being carried round with the friction discs until one is arrested by the engagement of a lug on the plate with a drag-taking stop abutment in the housing and the continued angular movement of the other pressure plate provides a servo action.

Self-energising brakes of the kind set forth are commonly used in tractors and like vehicles, and may be "dry" or liquid cooled.

In known self-energising brakes of the kind set forth the camming means usually comprises balls or rollers located in co-operating oppositely inclined recesses in the adjacent faces of the pressure plates. Upon operation of the brake-applying mechanism to move the pressure plates angularly in opposite directions, the balls or rollers tend to move up ramps defined by the edges of the recesses to cause the pressure plates to move apart and into engagement with the friction discs.

According to our invention, in a self-energising disc brake of the kind set forth the camming means comprise complementary pairs of angularly spaced discrete pads on adjacent faces of the pressure plates which define ramp surfaces inclined with respect to the planes of the plates, and the ramp surfaces of each pair co-operate slidably to urge the plates relatively away from each other in an axial direction when the plates are moved relatively angularly by the brake-applying mechanism.

Preferably the ramp surfaces are formed integrally with the pressure plates, the construction of the brake being facilitated due to the elimination of recesses and balls or rollers.

Each pad is accurately positioned by suitable means, such as by machining or sintering, so as to contact the complementary ramp surface of its respective pair over a contact area of a size sufficient to take the clamping forces developed when the brake is applied.

Conveniently each set of pads comprises the discrete flank areas of a multi-start helical thread. When the thread is of square form the ramp surfaces will be planar.

Preferably the contact areas are manufactured or at least coated in materials having low-friction properties such that, in serving to induce a clamping force, the camming means remains mechanically highly efficient and unlikely to lock-on.

One embodiment of our invention is illustrated in the accompanying drawings in which:-

Figure 1 is an end elevation of a self-energising brake; and

Figure 2 is a section on the line 2-2 of Figure 1.

The self-energising brake shown in the drawings comprises a housing 1 through which a rotatable shaft 2 extends axially. A pair of axially spaced friction discs (not shown) provided on opposite sides with linings of friction material are slidably splined on the shaft 2. The discs are adapted to be brought into engagement with axially spaced radial braking surfaces at opposite ends of the housing 1 by a pair of annular pressure plates 3 and 4 which are located between the discs and are centred by three stationary pilot lugs on the housing 1 of which only the lug 5 is shown.

Camming means 6 are associated with the pressure plates 3 and 4. As illustrated, the camming means 6 comprises four complementary pairs of angularly spaced discrete sets of pads 7 and 8 provided on the adjacent faces of the two plates 3 and 4. The pads 7 and 8 of each respective set comprise the discrete flank areas of a multi-start helical thread of square form. The flank areas define contact areas in the form of ramp surfaces 12,13 which are planer and are inclined with respect to the plane of the respective plate 3,4. The pads 7 and 8 are integral with the pressure plates 3 and 4, but could be made separately. They could be made of different materials.

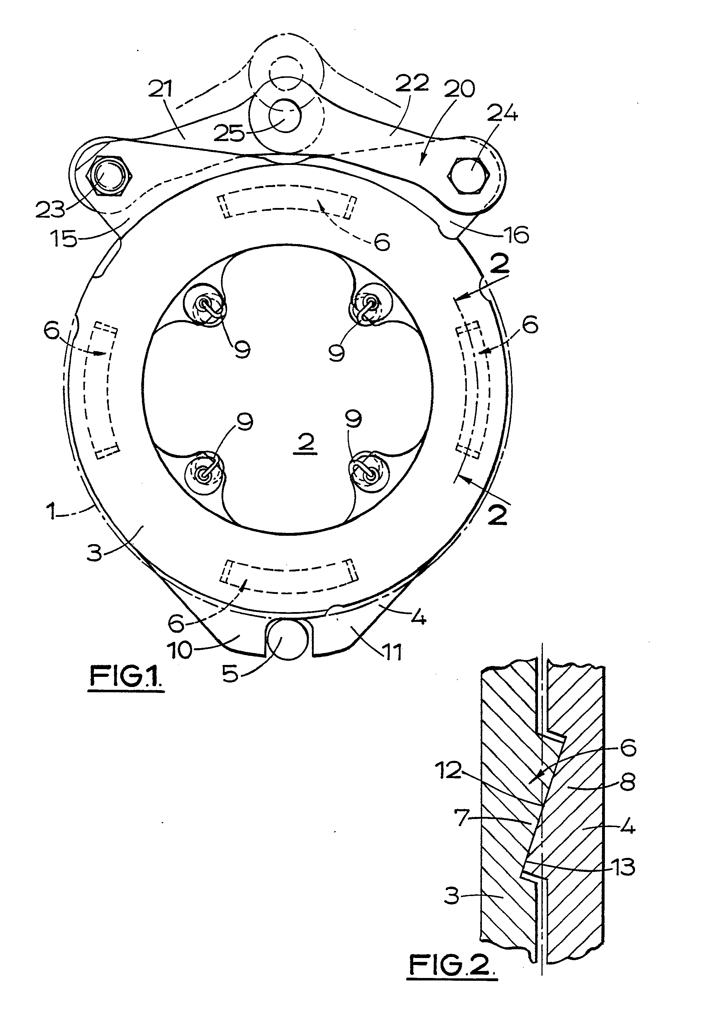

The pressure plates 3 and 4 are normally urged towards each other by means of angularly spaced tension return springs 9 and, in an "off" portion of brake as shown in Figure 2, with the friction linings substantially unworn the plates 3 and 4 are in close proximity, with the ramp surfaces 12 and 13 substantially in full facial contact.

The application of the brake is initiated by moving the pressure plates 3 and 4 angularly in opposite directions. This causes the ramp surfaces 12,13,7,8 of each pair to co-operate slidably and urge the plates 3 and 4 relatively away from each other. The plates 3 and 4 move apart into engagement with the friction discs, in turn to urge them into engagement with the radial surfaces in the housing.

When the discs are rotating in one direction, the plates 3 and 4 are carried round with the discs until one plate is arrested by the engagement of a radial lug 10,11 on that plate with an anchor pin, defining the lug 5. Continued angular movement of the other plate provides a servo-action to enhance the relative axial separation between the plates 3 and 4 and increase the braking tongue.

When the shaft 2 is rotating in the opposite direction and the brake is applied, the sequence described above is repeated except that the angular movement of the other plate is arrested by the anchor pin 5.

In a modification of the brake described above, the multi-start thread is of a configuration other than square. In such a construction the ramp surfaces will not necessarily be flat.

Each pad 7 and 8 is accurately positioned by suitable means, for example by machining. However, when the plates 3 and 4 are of sintered construction the pads 7 and 8 can be formed integrally during the sintering process.

The ramp surfaces 12 and 13 are suitably manufactured, or at least coated, in materials having low-friction properties.

The angular movement of the plates 3 and 4 to apply the brake is initiated by a brake-applying mechanism 20. The mechanism 20 comprises a pair of toggle links 21 and 22 which are symmetrically arranged and are of equal lengths. The link 21 is pivotally connected at its innermost end to a radial lug 15 on the pressure plate 3 by a pivotal connection 23, and the link 22 is pivotally connected at its innermost end to a radial lug 16 on the pressure plate 4 by a pivotal connection 24. The free ends of both links 20 and 21 are pivotally connected between the limbs of a bifurcated fitting by means of a pivot pin 25 and the fitting is coupled to the inner end of a radially moveable pull-rod (not shown), which may be operated mechanically or hydraulically.

In the application of the brake, a pull applied to the pull-rod in a radial direction is transmitted to both toggle links 21 and 22 to urge the lugs 15 and 16 towards each other in a circumferential direction to effect application of the brake with a self-energising action as described above.

The brake described above may be of the "dry" type. However it is prefered that the brake is of the liquid cooled, or oil-immersed type since, in such a brake, the cooling liquid acts as a lubricant between the sliding ramp surfaces 12 and 13.

## Claims

1. A self-energising disc brake of the kind in which rotatable friction discs provided with friction linings are adapted to be brought into engagement with spaced opposed braking surfaces in a housing (1) by pressure plates (3, 4) located between the friction discs and centered by stationary pilot lugs (5), application of the brake being initiated by angular movement of the pressure plates (3, 4) effected by operation of a brake-applying mechanism (20), and camming means (6) being associated with the pressure plates (3, 4) such that on operation of the brake-applying mechanism (20) to move the pressure plates angularly in opposite directions, the camming means (6) is operative to cause the pressure plates to move apart into engagement with the braking surfaces, the pressure plates then being carried round with the friction discs until one is arrested by the engagement of a lug (10, 11) on the plate with a drag-taking stop abutment (5) in the housing (1) and the continued angular movement of the other pressure plate provides a servo action, characterised in that the camming means (6) comprises complementary pairs of angularly spaced discrete pads (7, 8) on adjacent faces of the pressure plates which define ramp surfaces (12, 13) inclined with respect to the planes of the plates, and the ramp surfaces (12, 13) of each pair co-operate slidably to urge the plates relatively away from each other in an axial direction when the plates are moved relatively angularly by the brake-applying mechanism.

2. A disc brake according to claim 1 characterised in that the pads (7, 8) are formed integrally with the pressure plates.

3. A disc brake according to claim 1 or claim 2 characterised in that each pair of pads (7, 8) comprises the discrete flank areas of a multi-start helical thread.

4. A disc brake according to claim 3 characterised in that the thread is of square form.

5. A disc brake according to any preceding claim characterised in that the areas of the pairs of ramp surfaces (12, 13) which slide over each other during actuation of the brake are made of materials having low friction properties.

6. A disc brake according to any one of claims 1 to 5 characterised in that the areas of the pairs of ramp surfaces (12, 13) which slide over each other during actuation of the brake are coated with materials having low friction properties.

7. A disc brake according to any preceding claim characterised in that the brake is of the liquid cooled type.

8. A pair of pressure plates for a self-energising disc brake in which rotatable friction discs provided with linings of friction material are adapted to be brought into engagement with spaced opposed braking surfaces in a housing (1) by pressure plates (3, 4) located between the friction discs and centred by stationary pilot lugs (5), camming means (6) are provided between the adjacent faces of the pressure plates, and the application of the brake is initiated by moving the pressure plates angularly in opposite directions, the pressure plates then moving apart by the action of the camming means so that the pressure plates move into engagement with the friction discs which are urged, in turn, into engagement with the braking surfaces against the force in tension return springs (9) acting between the pressure plates, the pressure plates being carried round with the friction discs until one is arrested by the engagement of a lug (10, 11) on the plate with a drag-taking stop abutment (5) in the housing, and the continued angular movement of the other pressure plate providing a servo action, characterised in that the faces of the pair of pressure plates that are adjacent in the assembled brake are provided with complementary pairs of angularly spaced discrete pads (7, 8) which define ramp surfaces (12, 13) inclined with respect to the planes of the plates, and the ramp surfaces (12, 13) of each pair define the camming means (6), co-operating slideably to urge the plates relatively away from each other in an axial direction when the plates are moved relatively angularly.

9. A pair of pressure plates according to claim 8 characterised in that the pads (7, 8) are formed integrally with the plates.

10. A pair of pressure plates according to claim 8 or claim 9 characterised in that the areas of the pairs of ramp surfaces which in use slide over each other have low friction properties.

FIG.1.

FIG.2.